# EUROPÄISCHE PATENTANMELDUNG

(11) **EP 0 653 321 A1**
(43) Veröffentlichungstag der Anmeldung: **17.05.1995**
(21) Anmeldenummer: 94115514.5
(22) Anmeldetag: 01.10.1994
(51) Int. Cl.: B60G 11/46, B62D 61/12

(54) **Achsanhebevorrichtung**

(30) Priorität: 13.11.1993 DE 9317418 U
(71) Anmelder: Otto Sauer Achsenfabrik Keilberg, D-63856 Bessenbach (DE)
(72) Erfinder: Büttner, Josef, D-63857 Waldaschaff (DE)
(74) Vertreter: KEIL & SCHAAFHAUSEN Patentanwälte

(57) **Zusammenfassung**

Die Erfindung bezieht sich auf eine Achsanhebevorrichtung für eine luftgefederte Fahrzeugachse (12), deren Achsführung auf beiden Fahrzeugseiten über Federlenker (16) erfolgt, welche an ihrem hinteren Ende mittels einer Achseinspannung (18) an der Fahrzeugachse (12) fest eingespannt und an ihrem vorderen Ende vor der Fahrzeugachse (12), z.B. über einen Haltebock (20), an dem Fahrzeugrahmen (21) angelenkt sind, und mit einer Hubeinrichtung (32), welche einen gelenkfreien im wesentlichen parallel zur Richtung der Federlenker (16) verlaufenden Druckarm (38) aufweist, welcher in seinem hinteren Bereich fest mit der Fahrzeugachse (12) verbunden ist und auf dessen vorderes Ende ein z.B. als Liftbalg ausgebildetes Stellglied (34) einwirkt, und ist dadurch gekennzeichnet, daß das Stellglied (34) einerseits über einen um eine zur Fahrzeugachse (12) im wesentlichen parallelen Gelenkachse (41) schwenkbaren Schwenkarm (40) an dem Fahrzeugrahmen (21) angelenkt und andererseits mit dem vorderen Ende des Druckarms (38) verbunden ist.

## Beschreibung

Die Erfindung bezieht sich auf eine Achsanhebevorrichtung für eine luftgefederte Fahrzeugachse, deren Achsführung auf beiden Fahrzeugseiten über Federlenker erfolgt, welche an ihrem hinteren Ende mittels einer Achseinspannung an der Fahrzeugachse fest eingespannt und an ihrem vorderen Ende vor der Fahrzeugachse, z.B. über einen Haltebock, an dem Fahrzeugrahmen angelenkt sind, und mit einer Hubeinrichtung, welche einen gelenkfreien im wesentlichen parallel zur Richtung der Federlenker verlaufenden, Druckarm aufweist, welcher in seinem hinteren Bereich fest mit der Fahrzeugachse verbunden ist und auf dessen vorderes Ende ein z.B. als Liftbalg ausgebildetes Stellglied einwirkt.

Bei einer aus der DE-A-3 333 171 bekannten Achsanhebevorrichtung dieser Art verläuft der Druckarm von der Achse aus gesehen etwa parallel zur Richtung der Federlenker und ragt über die Anlenkpunkte der Federlenker am Chassis hinaus. An dem Vorderende des Druckarms greift ein fest mit dem Chassis verbundener Liftbalg zum Anheben der Achse an. Der Druckarm ist über die Achseinspannung der Federlenker mit der Achse verschraubt. Eine rückwärtige über die Achse hinausragende Verlängerung des Druckarmes bildet einen Luftfederträger. Mit dieser Achsanhebevorrichtung werden Achslifthübe erreicht, die für den gewöhnlichen Straßeneinsatz, z.B. von Sattelanhängern, ausreichend sind. Im kombinierten Straße/Schiene-Verkehr, bei dem die Fahrzeuge streckenweise wie ein Bahnwaggon transportiert werden, sind erheblich größere Achslifthübe als im ausschließlichen Straßeneinsatz der Fahrzeuge erforderlich. Der gewünschte Lifthub wird zum einen von den zu durchfahrenden Tunnelprofilen bestimmt, wozu die Räder während des Schienenbetriebes um ein definiertes Niveau angehoben werden müssen. Zum anderen begrenzt die Blocklänge des z.B. als Liftbalg ausgebildeten Stellgliedes die maximale Fahrhöhe des Fahrzeuges, bspw. des Sattelanhängers. Die maximale Fahrhöhe ist bspw. für das Ankuppeln des Fahrzeuges an ein schienengebundenes Drehgestell von Bedeutung. Mit der bekannten oder ähnlichen Achsanhebevorrichtungen sind die insbesondere für den kombinierten Straße/Schiene-Verkehr erforderlichen Achslifthübe nicht immer realisierbar. Darüberhinaus besteht das Bedürfnis, Achsanhebevorrichtungen in besonders kompakter Bauweise einzusetzen. So verfügen bspw. Sattelanhänger, die auch im Schienenbetrieb eingesetzt werden, über einen verstärkten Rahmen, der im Gegensatz zur Bauart konventioneller Sattelanhänger an seiner Unterseite geschlossen sein kann. Dadurch ergeben sich Beschränkungen bezüglich der maximalen Höhenabmessung der Achsanhebevorrichtung. Insbesondere sollten die Achsanhebevorrichtung nicht wesentlich höher als die mit dem Fahrzeugrahmen verschweißten Halteböcke für die Federlenker bauen. Desweiteren sollte eine bestimmte Mindesthöhe der Achsanhebevorrichtung über der Fahrbahn eingehalten werden. Schließlich sollte die Achsanhebevorrichtung auch bei mehrachsigen Fahrzeugen problemlos einsetzbar sein, wozu eine bestimmte Länge nicht überschritten werden darf.

Aus der DE-A-4 007 634 ist eine Aufhängung für eine einen starren Achskörper aufweisende Fahrzeugachse mit wenigstens je einer Blattfederanordnung beidseits der Federlängsmittelebene bekannt, welche mit ihrem vorderen Ende an einem chassisfesten Lagerpunkt angelenkt und im Abstand davon starr mit dem Achskörper verspannt ist, wobei ein von dem Achskörper aus jeweils nach hinten ragender Tragarm das untere Lager einer Luftfeder bildet, auf deren Oberseite sich das Chassis abstützt, wobei außergewöhnlich große Federwege bei verhältnismäßig geringer Bauhöhe erreicht werden können, indem sich die jeweilige Luftfeder nach oben an dem freien Ende einer vorzugsweise in einer Ebene parallel zur Fahrzeuglängsmittelebene um einen chassisfesten Lagerpunkt schwenkbare Schwinge abstützt, deren Schwenklage relativ zu dem Chassis mittels eines Stellgliedes einstellbar ist. Diese Achsaufhängung erfordert außer der nach der DE-A- 3 333 171 bekannten Liftanordnung einen zusätzlichen baulichen Aufwand für die Schwinge und das Stellglied für deren Einstellung relativ zum Chassis.

Der Erfindung liegt die Aufgabe zugrunde, eine Achsanhebevorrichtung der eingangs genannten Art anzugeben, die große Achslifthübe ermöglicht, sowie gewichtssparend und kompakt aufgebaut ist.

Diese Aufgabe wird erfindungsgemäß im wesentlichen dadurch gelöst, daß das Stellglied einerseites über einen um eine zur Fahrzeugachse im wesentlichen parallelen Gelenkachse schwenkbaren Schwenkarm an dem Fahrzeugrahmen angelenkt und andererseits mit dem vorderen Ende des Druckarms verbunden ist. Dadurch, daß das vorzugsweise als Luftbalg oder Luftfeder ausgebildete Stellglied einerseits fest über einen Druckarm mit dem Achskörper verbunden und andererseits über einen um eine im wesentlichen zur Fahrzeugachse parallele Gelenkachse schwenkbaren Schwenkarm an dem Fahrzeugrahmen angelenkt ist, werden große Hübe gewährleistet, da das Stellglied während des Achslifthubes selbst um die Schwenkachse schwenken kann, so daß ein Ausknicken des Stellgliedes in gestreckter Lage verhindert und das Stellglied bis zur Blocklänge genutzt werden kann. Zum Einfedern der Achsanhebevorrichtung ist es von Vorteil, wenn die Blocklänge des z.B. als Liftbalg ausgebildeten Stellgliedes sehr gering ist. Eine geringe Blocklänge sorgt auch dafür, daß das Fahrzeug auf ein sehr hohes Niveau angehoben werden kann. Mit der erfindungsgemäßen Achsanhebevorrichtung sind Achslifthübe von bis zu 500 mm realisierbar, so daß das bspw. als Sattelanhänger ausgebildete Fahrzeug im kombinierten Straße/Schiene-Verkehr an ein schienengebundenes Drehgestell angekuppelt werden kann. Die sehr hohen Achslifthübe, die ohne Ausknicken des Stellgliedes erfindungsgemäß erzielbar sind, gewährleisten, daß die Räder des Fahrzeuges weit genug angehoben werden können, damit das Fahrzeug durch die von der Bahn vorgeschriebenen Tunnelprofile paßt.

Gemäß einer vorteilhaften Weiterbildung der Erfindung ist die Gelenkachse zwischen der Fahrzeugachse und dem Anlenkpunkt der Federlenker angeordnet. Aufgrund dieser Maßnahme können auch mehrere dicht beieinander liegende Fahrzeugachsen mit jeweils einer der jeweiligen Fahrzeugachse zugeordneten Achsanhebevorrichtung ausgestattet sein. Aber auch für Fahrzeuge, bei denen lediglich eine Fahrzeugachse mittels der Achsanhebevorrichtung anhebbar sein soll, ist es vorteilhaft, daß der Raum vor dem Anlenkpunkt der Federlenker für andere Bauteile, wie bspw. Druckluftbehälter oder dgl., freigehalten wird.

Bei einer besonders vorteilhaften konstruktiven Lösung ist vorgesehen, daß die Gelenkachse oberhalb des Stellgliedes angeordnet ist sowie das untere Ende des Stellgliedes an dem freien Ende des Schwenkarms und das obere Ende des Stellgliedes mit dem vorderen Ende des Druckarms verbunden sind.

Von Vorteil ist die Gelenkachse oberhalb des Anlenkpunktes benachbart dem Haltebock am Fahrzeugrahmen angeordnet. Durch diese Maßnahme wird eine geringe Bauhöhe der Achsanhebevorrichtung bei gleichzeitiger Einhaltung der erforderlichen Mindesthöhe über der Fahrbahn erfüllt.

Nach einer anderen Ausführungsform der Erfindung ist das z.B. als Liftbalg ausgebildete Stellglied mit einer unteren Grundplatte am freien Ende des Gelenkarmes und mit einer oberen Grundplatte an dem vorderen Ende des Druckarms angebracht. Hierdurch wird eine leichte Montage und Demontage erreicht.

Eine besonders stabile und verwindungssteife Konstruktion des Gelenkarms wird dann gewährleistet, wenn der Gelenkarm durch zwei seitlich des Stellgliedes verlaufende Streben gebildet ist, die gemeinsam mit der unteren Grundplatte das Stellglied U-förmig umfassen. Hierdurch wird aufgrund symmetrischer Krafteinleitung ein Abknicken des Stellgliedes vermieden.

Bezüglich der Stabilität der Vorrichtung ist es von Vorteil, wenn der Druckarm durch zwei Seitenteile gebildet ist, die gemeinsam mit der oberen Grundplatte das Stellglied U-förmig umfassen.

Gemäß einem besonders vorteilhaften, eigenständigen Merkmal der Erfindung weist der Druckarm an seinem achsabgewandten Rand eine Außenkontur auf, welche als Führungsfläche für den Gelenkarm oder für die untere Grundplatte dient. Da die obere und untere Grundplatte des Stellgliedes bzw. des Liftbalges grundsätzlich dazu neigen, sich parallel zueinander auszurichten, wird Gelenkarm bzw. die untere Grundplatte gegen die Außenkontur des Druckarmes gedrückt. Während des Achslifthubes gleitet somit der Gelenkarm oder die untere Grundplatte an der Außenkontur des Druckarmes geführt entlang. Durch eine entsprechende Gestaltung der Außenkontur des Druckarmes ist eine in Abhängigkeit von dem Achslifthub gesteuerte Schwenkbewegung des Schwenkarmes um die Gelenkachse möglich.

Ein weiterer Erfindungsgedanke besteht darin, die Außenkontur derart zu gestalten, daß der Spreizwinkel des z.B. als Liftbalg ausgebildeten Stellgliedes, d.h. der z.B. von den Grundplatten eingeschlossene Winkel, über den gesamten Hub gering, insbesondere kleiner als 20°, bevorzugt kleiner als 15° ist. Durch diese Maßnahme wird ein ungewöhnlich großer Liftbalghub gewährleistet, da der Spreizwinkel zwischen der oberen und unteren Grundplatte des Liftbalges aufgrund der Schwenkbarkeit des Schwenkarmes stets recht gering bleibt, so daß der volle Hub des Liftbalges für den Achslifthub genutzt werden kann.

Dabei ist es besonders vorteilhaft, wenn die oberen und unteren Grundplatten über den vollen Hub des Liftbalges annähernd parallel zueinander ausgerichtet sind, so daß einerseits ein Ausknicken des Liftbalges verhindert und andererseits der Liftbalg bis zur Blocklänge genutzt werden kann. Zu diesem Zweck weist vorzugsweise die untere Grundplatte randseitig eine Aussparung mit einem Anlagerand zur Anlage und/oder seitlichen Führung des Druckarmes auf. Dabei ist der Anlagerand im wesentlichen winklig ausgebildet, so daß der Schwenkarm bzw. die untere Grundplatte sicher auf der Außenkontur des Druckarmes und seitlich geführt entlang gleiten kann.

Ferner ist es von Vorteil, die Hubeinrichtung im wesentlichen mittig bezüglich der Fahrzeugachse anzuordnen.

Weitere Ziel, Merkmale, Vorteile und Anwendungsmöglichkeiten der vorliegenden Erfindung ergeben sich aus der nachfolgenden Beschreibung von Ausführungsbeispielen anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung, aber auch unabhängig von ihrer Zusammenfassung in den Ansprüchen oder deren Rückbeziehung.

Es zeigen:
- Fig. 1: eine Seitenansicht eines Ausführungsbeispiels der erfindungsgemäßen Achsanhebevorrichtung bei angehobener Position der Fahrzeugachse,
- Fig. 2: in Seitenansicht die Achsanhebevorrichtung gemäß Fig. 1 bei herabgelassener Position der Fahrzeug achse, und

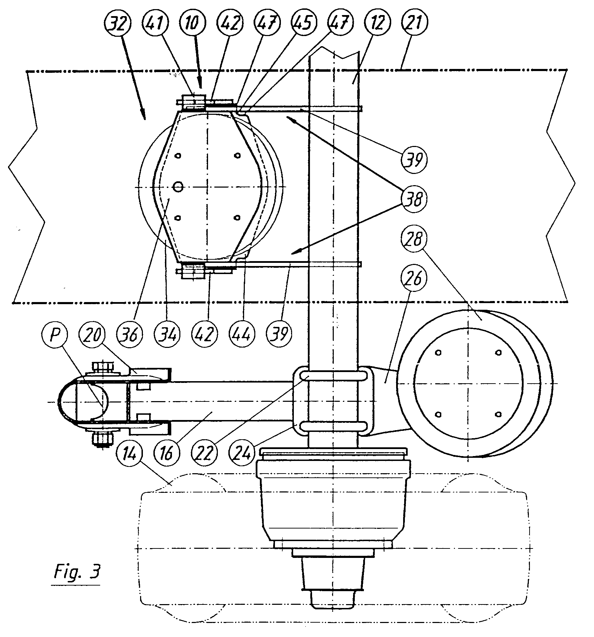

- Fig. 3: eine Draufsicht der Achsanhebevorrichtung gemäß Fig. 2.

Die in den Figuren dargestellte Achsanhebevorrichtung 10 dient dem Anheben einer luftgefederten Fahrzeugachse 12 mit Rädern 14. Geführt wird die Fahrzeugachse 12 über zwei beidseits der Fahrzeugmittellängsebene angeordnete Federlenker 16. Die Federlenker 16 sind achsseitig, d.h. hinten, mit der Fahrzeugachse 12 mittels einer Achseinspannung 18 fest verspannt. Chassisseitig, d.h. vorne, sind die Federlenker 16 jeweils an an dem Fahrzeugrahmen 21 angeschweißten Halteböcken 20 in Anlenkpunkten P angelenkt.

Die Achseinspannung 18 weist die Fahrzeugachse 12 übergreifende Federbügel 22 und unter der Fahrzeugachse 12 liegende Achslappen 24 auf, welche unter Einspannung der Federlenker 16 und eines nach hinten wegstehenden Luftfederträgers 26 mittels eines an dem Federbügel 22 befindlichen Gewindes und der Muttern 30 verschraubt sind. Auf den Luftfederträger 26 stützt sich nach unten ein Federbalg 28 ab, der kopfseitig an dem Fahrzeugrahmen 21 befestigt ist und zur Abfederung der Fahrzeugachse 12 während des Straßenbetriebes dient.

Eine Hubeinrichtung 32 mit einem insbesondere als Liftbalg ausgebildetes Stellglied 34 weist eine obere Grundplatte 36 und eine untere Grundplatte 44 auf. Die untere Grundplatte 44 ist über einen um eine Schwenkachse 41 schwenkbaren Schwenkarm 40 mit dem Fahrzeugrahmen 21 verbunden. Die Gelenkachse 41 ist achsparallel zu der Fahrzeugachse 12 ausgerichtet und zwischen der Fahrzeugachse 12 und dem Anlenkpunkt P der Fe derlenker 16 sowie oberhalb des Anlenkpunktes P benachbart des Haltebocks 20 am Fahrzeugrahmen 21 angeordnet.

Einends (oben) ist der Schwenkarm 40 gelenkig mit dem Fahrzeugrahmen 21 verbunden, während das andere (untere) Ende fest an der unteren Grundplatte 44 des Liftbalges 34 angeordnet ist.

Der Schwenkarm 40 wird durch zwei seitlich der Hubeinrichtung 32 verlaufende Streben 42 gebildet, die gemeinsam mit der unteren Grundplatte 44 des Stellglied 34 bzw. den Liftbalg U-förmig umfassen. Der Druckarm 38 besteht aus zwei Seitenteilen 39, die gemeinsam mit der oberen Grundplatte 36 den Liftbalg 34 U-förmig umfassen.

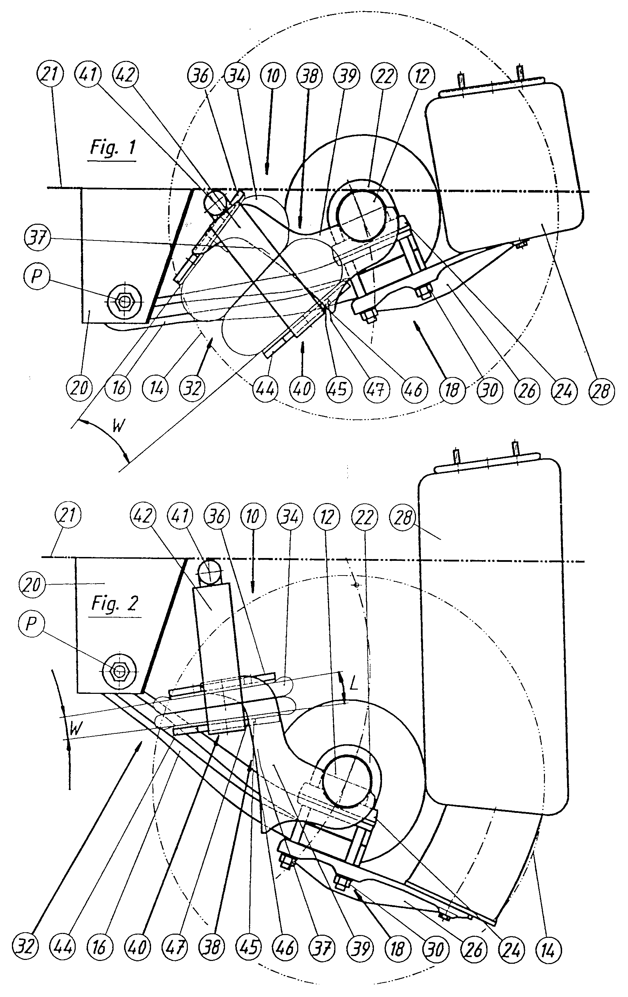

An einem achsabgewandten Randabschnitt 37 weist der Druckarm 38 eine Außenkontur 46 auf, welche als Anlage- und/oder Führungsfläche für den Schwenkarm 40 oder die untere Grundplatte 44 dient. Die Außenkontur 46 ist derart ausgebildet, daß der Spreizwinkel W des Stellgliedes 34, d.h. z.B. der von den Grundplatten 36, 44 eingeschlossene Winkel, über den gesamten Hub der Hubeinrichtung 32 gering, insbesondere kleiner als 20°, bevorzugt 15° ist. Durch diese Maßnahme weist die eingefederte Achsanhebevorrichtung eine sehr geringe Blocklänge L (Fig. 2) des Stellgliedes 34 auf. Durch diese Anordnung werden ungewöhnlich große Liftbalghübe ermöglicht, da der Spreizwinkel W aufgrund der Schwenkbewegung des Schwenkarmes 40 stets sehr gering bleibt.

Zur Anlage und seitlichen Führung des Druckarmes 38 weist die untere Grundplatte 44 randseitig eine Aussparung 45 mit einem Anlagerand 47 auf, so daß die untere Grundplatte 44 bei einem Anheben der Fahrzeugachse 12 auf der Außenkontur 46 des Druckarmes 38 seitlich geführt entlang gleiten kann. Die Hubeinrichtung 32 ist im wesentlichen mittig der Fahrzeug achse 12 angeordnet.

### Bezugszeichenliste:

- 10: Achsanhebevorrichtung
- 12: Fahrzeugachse
- 14: Rad
- 16: Federlenker
- 18: Achseinspannung
- 20: Haltebock
- 21: Fahrzeugrahmen
- 22: Federbügel
- 24: Achslappen
- 26: Luftfederträger
- 28: Federbalg
- 30: Mutter
- 32: Hubeinrichtung
- 34: Stellglied, z.B. Liftbalg
- 36: obere Grundplatte
- 37: Randabschnitt
- 38: Druckarm
- 39: Seitenteil
- 40: Schwenkarm
- 41: Gelenkachse
- 42: Streben
- 44: untere Grundplatte
- 45: Aussparung
- 46: Außenkontur
- 47: Anlagerand
- 48: Spreizwinkel
- L: Blocklänge
- P: Anlenkpunkt
- W: Spreizwinkel

## Patentansprüche

1. Achsanhebevorrichtung für eine luftgefederte Fahrzeugachse (12), deren Achsführung auf beiden Fahrzeugseiten über Federlenker (16) erfolgt, welche an ihrem hinteren Ende mittels einer Achseinspannung (18) an der Fahrzeugachse (12) fest eingespannt und an ihrem vorderen Ende vor der Fahrzeugachse (12), z.B. über einen Haltebock (20), an dem Fahrzeugrahmen (21) angelenkt sind, und mit einer Hubeinrichtung (32), welche einen gelenkfreien im wesentlichen parallel zur Richtung der Federlenker (16) verlaufenden Druckarm (38) aufweist, welcher in seinem hinteren Bereich fest mit der Fahrzeugachse (12) verbunden ist und auf dessen vorderes Ende ein z.B. als Liftbalg ausgebildetes Stellglied (34) einwirkt, dadurch gekennzeichnet, daß das Stellglied (34) einerseits über einen um eine zur Fahrzeugachse (12) im wesentlichen parallelen Gelenkachse (41) schwenkbaren Schwenkarm (40) an dem Fahrzeugrahmen (21) angelenkt und andererseits mit dem vorderen Ende des Druckarms (38) verbunden ist.

2. Achsanhebevorrichtung nach Anspruch 1, dadurch gekennzeichnet, daß die Gelenkachse (41) zwischen der Fahrzeugachse (12) und dem Anlenkpunkt (P) der Federlenker (16) angeordnet ist.

3. Achsanhebevorrichtung nach Anspruch 1 oder 2, dadurch gekennzeichnet, daß die Gelenkachse (41) oberhalb des Stellgliedes (34) angeordnet ist sowie das untere Ende des Stellgliedes (34) an dem freien Ende des Schwenkarms (40) und das obere Ende des Stellgliedes (34) mit dem vorderen Ende des Druckarms (38) verbunden sind.

4. Achsanhebevorrichtung nach einem der Ansprüche 1 bis 3, dadurch gekennzeichnet, daß die Gelenkachse (41) oberhalb des Anlenkpunktes (P) benachbart dem Haltebock (20) am Fahrzeug rahmen (21) angeordnet ist.

5. Achsanhebevorrichtung nach einem der vorhergehenden Ansprüche, dadurch gekennzeichnet, daß das z.B. als Liftbalg ausgebildete Stellglied (34) mit einer unteren Grundplatte (44) am freien Ende des Schwenkarms (40) und mit einer oberen Grundplatte (36) an dem vorderen Ende des Druckarms (38) angebracht ist.

6. Achsanhebevorrichtung nach einem der vorhergehenden Ansprüche, dadurch gekennzeichnet, daß der Schwenkarm (40) durch zwei seitlich des Stellgliedes (34) verlaufende Streben (42) gebildet ist, die gemeinsam mit der unteren Grundplatte (44) das Stellglied (34) U-förmig umfassen.

7. Achsanhebevorrichtung nach einem der vorhergehenden Ansprüche, dadurch gekennzeichnet, daß der Druckarm (38) durch zwei Seitenteile (39) gebildet ist, die gemeinsam mit der oberen Grundplatte (36) das Stellglied (34) U-förmig umfassen.

8. Achsanhebevorrichtung nach einem der vorhergehenden Ansprüche, dadurch gekennzeichnet, daß der Druckarm (38) an seinem achsabgewandten Rand (37) eine Außenkontur (46) aufweist, welche als Führungsfläche für den Schwenkarm (40) oder die untere Grundplatte (44) dient.

9. Achsanhebevorrichtung nach Anspruch 8, dadurch gekennzeichnet, daß die Außenkontur (46) derart gestaltet ist, daß der Spreizwinkel (48) des z.B. als Liftbalg ausgebildeten Stellgliedes (34), d.h. der z.B. von den Grundplatten (36, 44) eingeschlossene Winkel, über den gesamten Hub gering, insbesondere kleiner als 20°, bevorzugt kleiner als 15° ist.

10. Achsanhebevorrichtung nach einen der Ansprüche 8 oder 9, dadurch gekennzeichnet, daß die untere Grundplatte (44) randseitig eine Aussparung (45) mit einem Anlagerand (47) zur Anlage und/oder seitlichen Führung des Druckarms (38) aufweist.

11. Achsanhebevorrichtung nach einem der vorhergehenden Ansprüche, dadurch gekennzeichnet, daß die Hubeinrichtung (32) im wesentlichen mittig bezüglich der Fahrzeugachse (12) angeordnet ist.
